# EUROPÄISCHE PATENTSCHRIFT

(11) **EP 0 299 471 B1**
(45) Veröffentlichungstag und Bekanntmachung des Hinweises auf die Patenterteilung: **21.12.1994**
(21) Anmeldenummer: 88111309.6
(22) Anmeldetag: 14.07.1988
(51) Int. Cl.: F24D 3/10, F24D 17/00, F16L 39/00

(54) **Flüssigkeits- bzw. Gaskreislauf, insbesondere für eine Brauchwarm- oder Heizwasserversorgungsanlage**
Liquid respectively gas cycle, particularly for a hot water or a heating water system
Circulation de liquide, respectivement de gaz, notamment pour un système d'eau sanitaire ou de chauffage

(30) Priorität: 16.07.1987 AT 1798/87
(43) Veröffentlichungstag der Anmeldung: 18.01.1989
(73) Patentinhaber: Holztrattner, Heinrich, A-5412 Puch (AT)
(72) Erfinder: Holztrattner, Heinrich, A-5412 Puch (AT)
(74) Vertreter: Hilleringmann, Jochen, Dipl.-Ing.

(56) Entgegenhaltungen:
- DE-A- 3 105 406
- DE-A- 3 111 533
- DE-A- 3 508 932
- DE-A- 3 523 596

## Beschreibung

Die Erfindung bezieht sich auf einen Flüssigkeits- bzw. Gaskreislauf, insbesondere für eine Brauchwarm- oder Heizwasserversorgungsanlage.

Aus der DE-A 3 523 596 ist ein Flüssikeitskreislauf mit einer den Kreislauf aufrechterhaltenden Fördereinrichtung bekannt geworden, bei der eine als Vor- und Rücklaufleitung ausgebildete Doppelrohrleitung aus einem die Vorlaufleitung bildenden Innenrohr und einem die Rücklaufleitung formenden Außenrohr vorgesehen ist, wobei das Innenrohr druckseitig an die Fördereinrichtung angeschlossen ist.

Aus der DD-B-159 806 ist bei einer konzentrischen Rohranordnung bekannt, die Vorlaufleitung nach außen, also in den Ringraum, zu legen, das Innenrohr als flexible Plastrohrleitung auszugestalten und nach Montage des Außenrohres in dieses einzuschieben, wobei die Lage der Förderpumpe als Druckerzeuger offengelassen ist.

Vor allem in mehrstöckigen Gebäuden ist es durchaus üblich, für die Brauchwarmwasserversorgung einen geschlossenen Kreislauf vorzusehen, der auf Grund eines ständigen umwälzens von Warmwasser dafür sorgt, daß beim Öffnen eines Wasserhahns unabhängig von dessen Lage möglichst schnell auch Warmwasser zur Verfügung steht. Um dabei den Installations- und Isolationsaufwand zu verringern und auch mit kleineren Wasserumlaufmengen auszukommen, wurde gemäß der DD-B-159 806 bereits vorgeschlagen, Vor- und Rücklaufleitung zu einer Doppelrohrleitung zu kombinieren, wobei allerdings bisher das Außenrohr als Vorlaufleitung und das biegsame Innenrohr als Rücklaufleitung dienen. Dieses Innenrohr muß daher auf Grund der auftretenden äußeren Druck- und inneren Saugwirkung verhältnismäßig dickwandig und belastungsfähig hergestellt sein, was das Einziehen des Innenrohrs in das Außenrohr erschwert und recht hohe Fertigungskosten mit sich bringt. Darüber hinaus sind bei einem winkeligen Verlegen dieses Doppelrohres Quetschungen des Innenrohres in den Eckbereichen und damit Durchflußstörungen zu befürchten. Auch gibt es wegen der recht hohen Temperaturdifferenz zwischen dem warmen Vorlauf im Außenrohr und der kalten Umwelt des Doppelrohres unerwünschte Wärmeverluste.

Der Erfindung liegt daher die Aufgabe zugrunde, diese Mängel zu beseitigen und einen Flüssigkeits- bzw. Gaskreislauf der eingangs geschilderten Art zu schaffen, der sich bei besonders aufwandsarmer Herstellung durch seine rationelle Verlegbarkeit, durch seine Funktionssicherheit und durch seine gute Isolierbarkeit auszeichnet.

Die Erfindung löst diese Aufgabe durch die Merkmale des unabhängigen Patentanspruches. Durch diese einfache, aber entscheidende Maßnahme muß das Innenrohr nur mehr den reinen Fließdruck aufnehmen und kann daher entsprechend dünnwandig und flexibel bleiben. Der Fertigungsaufwand wird gesenkt, das biegeweiche Innenrohr läßt sich schwierigkeitslos in das Außenrohr einziehen und der Aufblaseffekt des Vorlauf-Fließdruckes für das Innenrohr beseitigt auch jede Quetschgefahr bei winkelig verlegten Leitungen. Da weiters der wärmere Vorlauf im Inneren der Doppelrohrleitung liegt, braucht die Wärmeisolierung nur mehr auf die geringere Temperaturdifferenz zwischen dem Rücklauf des Außenrohres und der Umwelt ausglegt zu werden, was die Wärmeverluste zu minimieren hilft.

Diese Doppelrohrleitung eignet sich selbstverständlich nicht nur für Brauchwarmwasser-Versorgungsanlagen, sondern auch für Heizanlagen und für alle anderen Kreisläufe mit flüssigen oder gasförmigen Wärmeträgern, wie sie für Klimaanlagen, chemische Erzeugungsanlagen oder dgl. Verwendung finden.

Das Stützrohr kann eine radiale Durchtrittsöffnung aufweisen und sich über einen Stützflansch als Halteglied an einem am Außenrohr angesetzten, verschließbaren T-Anschlußstück abstützen, das Innenrohr bzw. das Stützrohr läßt sich aber auch durch ein an das Außenrohr endseitig angesetztes T-Anschlußstück axial verschiebbar hindurch- bzw. herausführen und ausgangsseitig über einen Schraub-Klemmverschluß als Halteglied dichtend am T-Anschlußstück abstützen, wobei vorzugsweise der Schraub-Klemmverschluß aus zwei miteinander unter Zwischenlage einer auf das Innenrohr bzw. Stützrohr aufgesteckten Dichtung verschraubbaren Anschlußschraubringen besteht. Es ergeben sich zweckmäßige Konstruktionen für den Abschluß von Leitungen, das Abzweigen von Stichleitungen, für den Ansatz von Verbraucheranschlüssen u.dgl., wobei durch die axial verschiebbare Abstützung des Innenrohres bzw. Stützrohres über einen Schraub-Klemmverschluß eine rationelle Möglichkeit zur Anpassung und Einstellung des Innenrohres an die jeweiligen Gegebenheiten des Außenrohres in den Anschlußbereich u.dgl., gewährleitet wird.

Ist nach einer vorteilhaften Weiterbildung der Erfindung das Innenrohr zum nachträglichen Verlegen stellenweise durch eine verschließbare Montageöffnung im Außenrohr zugänglich, wobei zum Verschließen der Montageöffnung ein am Außenrohr axial verschiebbar aufgesetzter, mit diesem verspannbarer Rohrstutzen vorgesehen sein kann, ist auch ein Einziehen des Innenrohres in bereits verlegte Außenrohre mit wenigen Handgriffen möglich. Die Montageöffnungen lassen sich dabei selbstverständlich auch für etwaige spätere Reparatur- und Auswechselarbeiten nutzen.

In der Zeichnung ist der Erfindungsgegenstand beispielsweise veranschaulicht, und zwar zeigen Fig. 1 einen erfindungsgemäßen Flüssigkeitskreislauf in einem Anlagenschema, Fig. 1a bis 1d Querschnitte durch die Doppelrohrleitungen dieses Kreislaufes nach den Linien Ia-Ia, Ib-Ib, Ic-Ic bzw. Id-Id der Fig. 1, Fig. 2 ein erfindungsgemäßes T-Anschlußstück teils in Ansicht, teils im Axialschnitt, Fig. 3 ein anderes erfindungsgemäßes T-Anschlußstück ebenfalls teils in Ansicht und teils im Axialschnitt sowie Fig.4 ein Stück einer erfindungsgemäßen Doppelrohrleitung mit einer teilweise geöffneten, teilweise geschlossenen Montageöffnung.

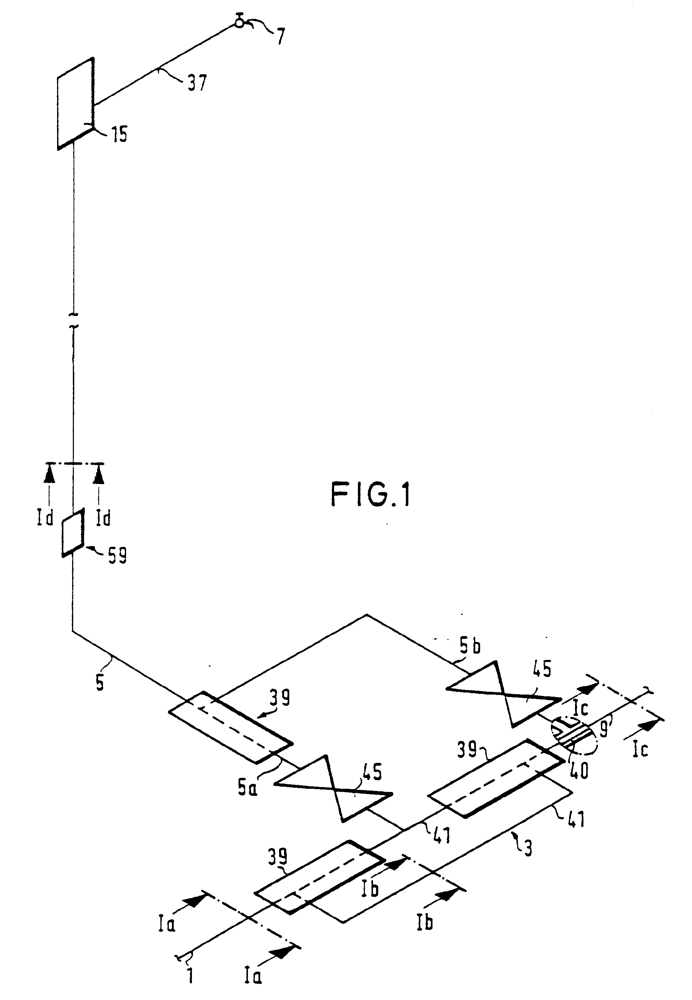

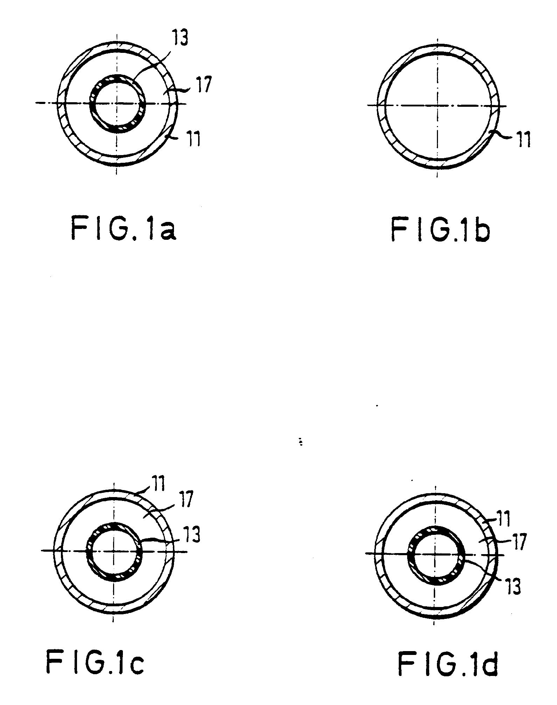

Gemäß dem Anlagenschema nach Fig. 1 einer Brauchwarmwasser-Versorgungsanlage ist an eine nicht weiter veranschaulichte Aufheizvorrichtung zur Warmwasserversorgung verschiedener Verbraucher ein aus einer Doppelrohrleitung 1 bestehender Kreislauf angeschlossen, von dem über eine Verzweigungseinrichtung 3 eine Zweigleitung 5 zu einem Verbraucher 7 führt. Andere nicht weiter dargestellte Verbraucher werden über die durchgehende Doppelrohrleitung 9 versorgt. Diese Doppelrohrleitungen 1, 5, 9 bestehen jeweils aus einem Außenrohr 11 und einem Innenrohr 13, wobei das Innenrohr 13 die Vorlaufleitung und das Außenrohr 11 die Rücklaufleitung bilden. Warmwasser fließt daher von der Aufheizvorrichtung durch das Innenrohr 13 in Richtung zum Verbraucher 7 und wird in einem T-Anschlußstück 15, in dem das Innenrohr 13 endet, in das Außenrohr 11 geleitet, indem es durch den verbleibenden Hohlraum 17 zurückströmt, wenn am Verbraucher 7 kein Warmwasser entnommen wird.

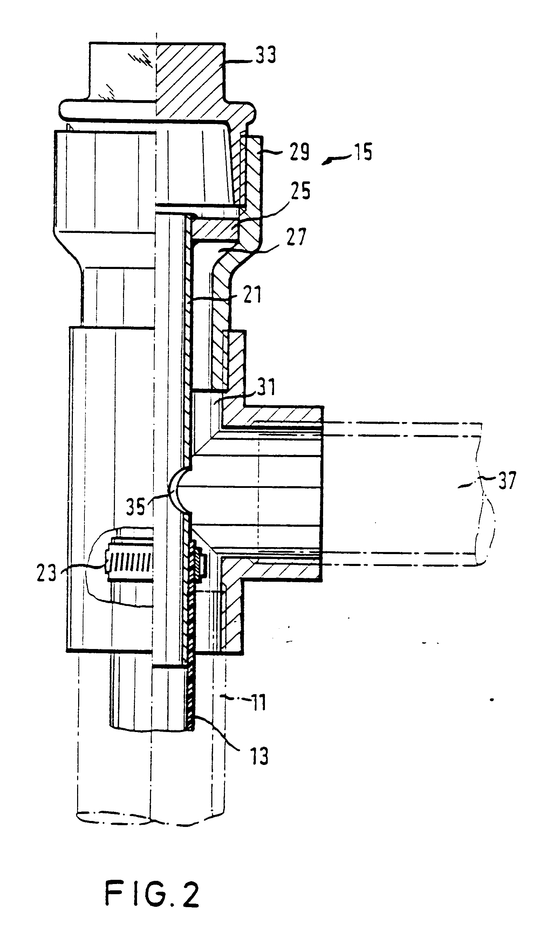

Wie aus Fig. 2 hervorgeht, is dabei das T-Anschlußstück 15 über ein Innengewinde auf das Ende des Außenrohres 11 aufgeschraubt. Das schlauchförmige Innenrohr 13 ist auf ein starres Stützrohr 21 aufgesteckt und durch einen Klemmring 23 gesichert, welches Stützrohr 21 am freien Ende einen Stützflansch 25 trägt, der sich in einer erweiterten Schulter 27 eines in eine Öffnung 31 des Anschlußstückes 15 eingeschraubten Anschlußstutzens 29 abstützt. Das Außenrohr wird über einen Drehverschluß 33 nach außen verschlossen, und eine Durchtrittsöffnung 35 ergibt eine Leitungsverbindung zwischen Innenrohr 13 und Außenrohr bzw. einer Verbraucheranschlußleitung 37. Führt diese Anschlußleitung 37 zu einem Verbraucher 7, beispielsweise einem Wasserhahn, kann Warmwasser bei geöffnetem Hahn aus dem Innenrohr 13 über die Durchtrittsöffnung 35 und die Anschlußleitung 37 entnommen werden, bei geschlossenem Hahn strömt das Warmwasser aus der Durchtrittsöffnung 35 in den Hohlraum 17 zwischen Innen- und Außenrohr 11, 13 und durch diesen zurück zur Heizvorrichtung.

Das Anschlußstück 15 ist als Endstück selbstverständlich nur dem jeweils letzten Verbraucher 7 einer Zweigleitung 5 zugeordnet. Zum Abzweigen vorangehender Verbraucher fehlen dann Abschlußstutzen 29 und Drehverschluß 33 und das T-Stück ist bei durchgehendem Innenrohr 13 einfach in das Außenrohr 11 eingesetzt.

Zum Abzweigen der Zweigleitung 5 gibt es, wie in Fig. 1 angedeutet, eine Verzweigungseinrichtung 3 mit drei T-Anschlußstücken 39, wobei das erste Anschlußstück 39 die Doppelrohrleitung 1 in zwei Einzelrohrleitngen 41 aufteilt (Fig. 1b) und das zweite Anschlußstück 39 die beiden Einzelrohrleitungen 41 wieder zur Doppelrohrleitung 9 zusammenführt (Fig. 1c). Dadurch ist es möglich, Einzelrohrleitungen 5a, 5b als Innen- und Außenrohr der Zweigleitung 5 abzuzweigen, wobei die Einzelrohrleitung 5a von der Einzelrohrleitung 41 für das Innenrohr und die Einzelrohrleitung 5b über ein Abzweigestück 40 vom Außenrohr 13 der Doppelrohrleitung 9 ausgehen, und mittels jeweils eines Verschlußelementes 45 die beiden Einzelrohrleitungen 5a, 5b und damit Vor- und Rücklauf getrennt voneinander abzusperren. Das dritte Anschlußstück 39 führt die beiden Einzelrohrleitungen 5a, 5b zusammen und bildet daraus die Doppelrohrleitung für die Zweigleitung 5.

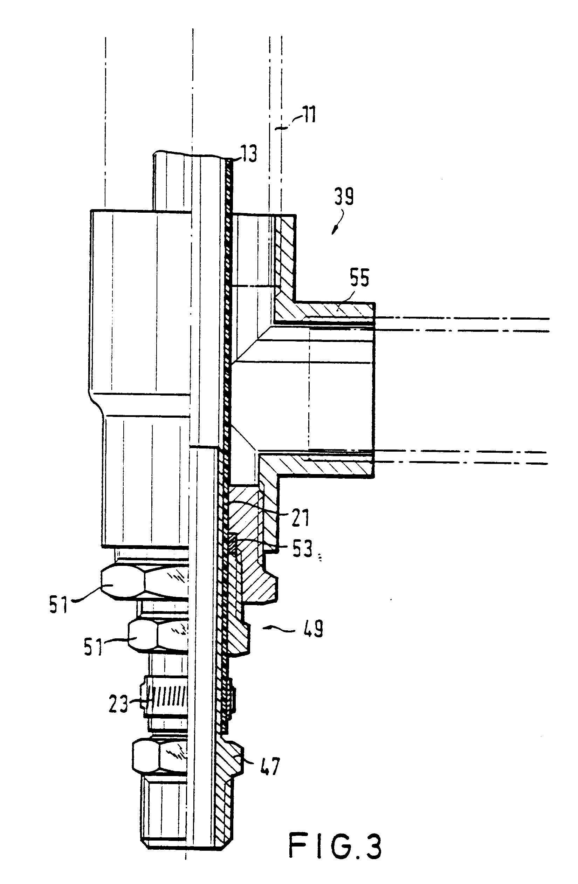

Wie aus Fig. 3 hervorgeht, ist beim T-Anschlußstück 39 das Innenrohr 13 über das Axialende des Außenrohres 11 hinausgeführt, auf ein Stützrohr 21 aufgesteckt und durch einen Klemmring 23 gesichert. Das Stützrohr 21 weist einen äußeren Anschluß 47 zum Anschluß einer Einzelrohrleitung 41 auf, wobei ein Schraub-Klemmverschluß 49 aus zwei ineinander verschraubbaren Anschlußschraubringen 51 für eine entsprechende Abdichtung sorgen, da durch das Verschrauben eine zwischen den beiden Anschlußringen 51 eingesetzte Dichtung 53 vorgespannt wird und sich dicht an das Stützrohr 21 anlegt. Zusätzlich zum Anschluß 47 für das Innenrohr 13 gibt es einen Anschluß 55 für das Außenrohr 11, so daß eine Trennung des Doppelrohres in zwei Einzelrohre bzw. umgekehrt eine Zusammenführung zweier Einzelrohre zu einem Doppelrohr möglich ist.

Die Außenrohre 11 der Doppelrohrleitung sind meist aus druckstabilem, festem Material hergestellt, die Innenrohre 13 hingegen bestehen aus dünnem, flexiblem Material, so daß das schlauchförmige Innenrohr 13 nach der Montage oder Teilmontage des fest installierten Außenrohres 11 eingezogen werden kann, was in der Regel mit Hilfe eines durch das Außenrohr 11 hindurchgeführten Drahtseiles erfolgt. Das Innenrohr läßt sich dabei aus einem relativ lang bemessenen einheitlichen Schlauch herstellen, obwohl das Außenrohr häufig aus mehreren einzelnen Rohrabschnitten zusammengesetzt werden muß. Eine Wärmeisolierung ist lediglich für das Außenrohr erforderlich, wobei auch in bestimmten Einzelfällen das Innenrohr eine Isolierung bzw. eine isolierende Ummantelung aufweisen kann.

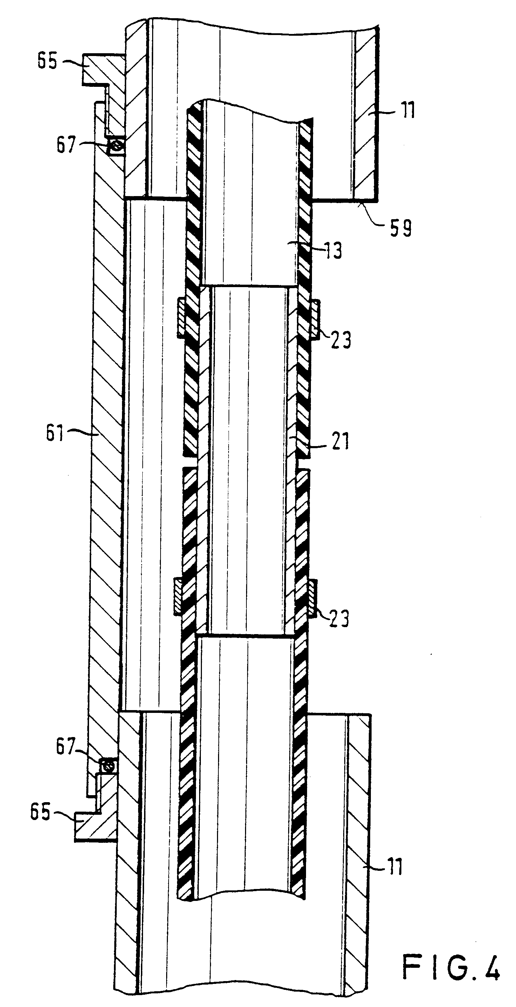

Um ein Einziehen des Innenrohres 13 zu ermöglichen, wenn das Außenrohr 11 bereits verlegt ist, gibt es, wie in Fig. 4 angedeutet, je nach Bedarf in bestimmten Abständen Montageöffnungen 59 im Außenrohr 11, die über Rohrstutzen 61 verschließbar sind. Die Rohrstutzen 61 stützen sich an einem Radialflansch und einem Spannring bzw. über zwei Spannringe 65 an den Außenrohren 11 ab, so daß ein einfaches Öffnen und Schließen möglich ist, und eine Ringdichtung 67 gewährleistet nach dem Festziehen des Spannringes 65 einen dichten Abschluß.

Ist der Innenschlauch 13 getrennt oder soll ein weiterer Innenschlauch angesetzt werden, kann dies vorteilhafterweise im Bereich der Montageöffnung 59 über ein engesetztes inneres Stützrohr 21 erfolgen, wobei die Schlauchenden des Innenrohres 13 wieder über Klemmringe 23 am Stützrohr 21 verankert werden.

## Patentansprüche

1. Flüssigkeits- bzw. Gaskreislauf, insbesondere für eine Brauchwarm- oder Heizwasserversorgunsanlage, mit einer den Kreislauf aufrechterhaltenden Fördereinrichtung und einer als Vor- und Rücklaufleitung vorgesehenen Doppelrohrleitung, die aus einem vorzugsweise steifen, die Rücklaufleitung bildenden Aussenrohr ( 11 ) und einem die Vorlaufleitung bildenden, druckseitig an die Fördereinrichtung angeschlossenen Innenrohr ( 13 ) besteht, das biegsam als Schlauch gestaltet ist, so daß es nachträglich in das Aussenrohr ( 11 ) einziehbar ist und im Bereich von Leitungsenden, Anschlüssen oder Abzweigungen ( 3 )auf ein Stützrohr ( 21 ) aufgesteckt und gesichert ist, das sich über ein Halteglied ( 25, 49 ) am Aussenrohr ( 11 ) abstützt.

2. Flüssigkeits- bzw. Gaskreislauf nach Anspruch 1, dadurch gekennzeichnet, daß das Stützrohr (21) eine radiale Durchtrittsöffnung (35) aufweist und sich über einen Stützflansch als Halteglied (25) an einem am Außenrohr (11) angesetzten, verschließbaren T-Anschlußstück (15) abstützt.

3. Flüssigkeits- bzw. Gaskreislauf nach Anspruch 1 oder 2, dadurch gekennzeichnet, daß das Innenrohr (13) bzw. das Stützrohr (21) durch ein an das Außenrohr (11) endseitig angesetztes T-Anschlußstück (39) axial verschiebbar hindurch- bzw. herausgeführt und ausgangsseitig über einen Schraub-Klemmverschluß als Halteglied (49) dichtend am T-Anschlußstück (39) abgestützt ist.

4. Flüssigkeits- bzw. Gaskreislauf nach Anspruch 3, dadurch gekennzeichnet, daß der Schraub-Klemmverschluß aus zwei miteinander unter Zwischenlage einer auf das Innenrohr (13) bzw. Stützrohr (21) aufgesteckten Dichtung (53) verschraubbaren Anschlußschraubringen (51) besteht.

5. Flüssigkeits- bzw. Gaskreislauf nach einem der Ansprüche 1 bis 4, dadurch gekennzeichnet, daß das Innenrohr (13) zum nachträglichen Verlegen stellenweise durch eine verschließbare Montageöffnung (59) im Außenrohr (11) zugänglich ist.

6. Flüssigkeits- bzw. Gaskreislauf nach Anspruch 5, dadurch gekennzeichnet, daß zum Verschließen der Montageöffnung (59) ein am Außenrohr (11) axial verschiebbar aufgesetzter, mit diesem verspannbarer Rohrstutzen (61) vorgesehen ist.

## Claims

1. A liquid and/or gas circuit, particularly for a plant for supplying hot tap water or room-heating water, comprising conveying means for maintaining the circulation and a double-tube line for use as a flow line and as a return line, which double-tube line consists of a preferably stiff outer tube (11) forming the return line and an inner tube (13), which constitutes the flow line and at its pressure end is connected to the conveying means and consists of flexible tubing so that it can subsequently be drawn into the outer tube (11) and adjacent to line ends, ports or branch junctions (3) is fitted on and locked to a backing tube (21), which is supported by means of a holding member (25, 49) on the outer tube (11).

2. A liquid and/or gas circuit according to claim 1, characterized in that the backing tube (21) has a radial through opening (35) and by means of a backing flange serving as a holding member (25) is supported on a tee fitting (15) which is attached to the outer tube (11) and adapted to be closed.

3. A liquid and/or gas circuit according to claim 1 or 2, characterized in that the inner tube (13) and/ or the backing tube (21) and extend axially slidably through and out of a tee fitting, which is attached to the end of the outer tube (11), and at the outlet end is sealingly supported on the tee fitting (39) by a screw-clamp fastener as a holding member (49).

4. A liquid and/or gas circuit according to claim 3, characterized in that the screw-clamp fastener consists of two connecting screw rings (51), which are adapted to be screwed one to the other with a gasket (53) interposed, which is fitted on the inner tube (13) and/or the backing tube (21).

5. A liquid and/or gas circuit according to any of claims 1 to 4, characterized in that the inner tube (13) is accessible at certain locations through a closable mounting opening (59) in the outer tube (11) so that the inner tube (13) can subsequently be installed.

6. A liquid and/or gas circuit according to claim 5, characterized in that a tubular port (61) is provided, which is axially slidably mounted on and adapted to be clamped to the outer tube (11) and serves to close the mounting opening (59).

## Revendications

1. Circuit de liquide ou de gaz notamment pour une installation d'alimentation en eau chaude sanitaire ou de chauffage, avec un équipement assurant la circulation dans le circuit et avec une conduite à tuyaux concentriques, soit le tuyau de départ et le tuyau de retour, ce dernier, de préférence rigide, étant le tuyau extérieur (11), et le tuyau de départ, le tuyau intérieur (13) branché sur l'équipement précité et constitué par un flexible de sorte à pouvoir être ultérieurement introduit dans le tuyau extérieur (11), et glissé et assuré sur un tube-support (21) au bout d'une conduite ou au niveau de raccords ou de branchements (3), le tube-support (21) s'appuyant contre le tuyau extérieur (11) par l'intermédiaire d'une pièce de fixation (25, 49).

2. Circuit de liquide ou de gaz suivant la revendication 1, caractérisé par le fait que le tube-support (21) comprend une ouverture radiale (35) et s'appuie contre un raccord en T (15) pouvant être bouché, et monté sur le tuyau extérieur (11), par l'intermédiaire d'un flasque-entretoise (25).

3. Circuit de liquide ou de gaz suivant la revendication 1 ou 2, caractérisé par le fait que le tuyau intérieur (13) ou le tube-support (21) est logé dans un raccord en T (39) monté sur le bout du tuyau extérieur (11), où il peut coulisser axialement et dont il peut sortir, et s'appuie à son extrémité de façon étanche contre le raccord en T (39) par l'intermédiaire d'une pièce de fixation (49) faisant fonction d'embout vissé.

4. Circuit de liquide ou de gaz suivant la revendication 3, caractérisé par le fait que l'embout vissé se compose de deux anneaux de raccordement filetés (51) entre lesquels est interposé un joint d'étanchéité (53) glissé sur le tuyau intérieur (13) ou le tube-support (21).

5. Circuit de liquide ou de gaz suivant l'une des revendications 1 à 4, caractérisé par le fait que le tuyau intérieur (13) est accessible par endroits, en vue d'un montage ultérieur, par une ouverture (59) dans le tuyau extérieur (11) laquelle peut être fermée.

6. Circuit de liquide ou de gaz suivant la revendication 5, caractérisé par le fait qu'il est prévu sur le tuyau extérieur (11) un cylindre (61) coulissant servant à la fermeture de l'ouverture (59), et qui peut être fixé sur ce tuyau.
